# EUROPÄISCHE PATENTSCHRIFT

(11) **EP 0 622 768 B1**
(45) Veröffentlichungstag und Bekanntmachung des Hinweises auf die Patenterteilung: **30.06.1999**
(21) Anmeldenummer: 94105826.5
(22) Anmeldetag: 15.04.1994
(51) Int. Cl.: G08C 15/12, B23K 9/10, G08C 19/16

(54) **Elektrische Schweissmaschine mit einer Fernsteuerung**
Electric soldering maschine with remote control
Machine de soudage électrique télécommandée

(30) Priorität: 24.04.1993 DE 4313508
(43) Veröffentlichungstag der Anmeldung: 02.11.1994
(73) Patentinhaber: Merkle, Wilhelm, 89359 Kötz (DE)
(72) Erfinder: Stump, Gabor, D-89335 Ichenhausen (DE); Schlander, Jürgen, D-72189 Vöhringen (Württ.) (DE); Rückert, Reinhart, D-89358 Kammeltal/Ried (DE)
(74) Vertreter: Munk, Ludwig, Dipl.-Ing.

(56) Entgegenhaltungen:
- EP-A- 0 244 807
- DE-U- 9 217 846

## Beschreibung

Die Erfindung betrifft eine elektrische Schweißmaschine mit einer Fernsteuerung.

Bei einer intern bekannten Schweißmaschine ist auf dem Griff des Brenners neben einem Schalter zum Ein- und Ausschalten der Schweißenergie eine Skala vorgesehen, der ein Drehknopf zugeordnet ist, durch den ein in einem Steuerstromkreis angeordnetes Potentiometer zum Verstellen der Schweißenergie beeinflussbar ist. Nachteilig hierbei ist, daß dem Schalter zum Ein- und Ausschalten der Schweißenergie und dem Potentiometer zum Verstellen der Schweißenergie separate Stromkreise zugeordnet sein müssen. Dies erfordert jedoch zusätzliche Buchsen im Bereich des Anschlusses des Schlauchpakets an die Basisbaugruppe, da die dort üblicherweise vorgesehene Steckkupplung lediglich dem Schalter zum Ein- und Ausschalten der Schweißenergie zugeordnete Buchsen besitzt. Die zusätzlichen Buchsen erfordern neben dem hiermit verbundenen Bereitstellungsaufwand auch einen erhöhten Bedienungsaufwand, da neben der dem Schlauchpaket zugeordneten Steckkupplung gleichzeitig auch noch die dem Steuerstromkreis zum Verstellen der Schweißenergie zugeordneten Buchsen in- und außer Eingriff bringbar sind. Außerdem ist der Drehknopf der bekannten Anordnung nicht bedienungsfreundlich genug. In diesem Zusammenhang ist davon auszugehen, daß der mit dem Brenner umgehende Schweißer in der Regel Handschuhe trägt. Außerdem ist die bei der bekannten Anordnung vorgesehene Anzeige mittels einer Skala für den Schweißer nur sehr schwer zu erkennen, was ebenfalls ungünstig auf die Zuverlässigkeit und Bedienungsfreundlichkeit durchschlägt. Hinzu kommt, daß das Potentiometer äußerst anfällig gegen Stoß und Schmutz ist. Die bekannte Anordnung erweist sich demnach als nicht einfach, zuverlässig und bedienungsfreundlich genung.

Die DE-U 92 17 846 enthält eine Fernsteuerung für elektrische Schweißmaschinen, bei der parallel zur über einen Schweißstromkreis mit dem Arbeitsgerät verbundenen Schweißstromquelle eine Hilfsspannungsquelle vorgesehen ist, der ein Strombegrenzungswiderstand vorgeordnet ist, zu dem parallel ein die Signale einer dem Arbeitsgerät zugeordneten Schalteinrichtung empfangender, der Steuereinrichtung zur Veränderung des Schweißstroms zugeordneter Empfänger geschaltet ist. Die Schalteinrichtung ist zwischen den Schweißstromleitungen geschaltet. Der Signalfluß von der Schalteinrichtung zum Empfänger verläuft daher über die Schweißstromleitungen. Während eines Schweißvorgangs ist daher eine Fernbedienung der Schweißstromquelle nicht möglich. Zum Nachstellen des Schweißstroms muß vielmehr der Schweißvorgang unterbrochen werden. Außerdem ist die Schalteinrichtung hier nicht auf dem Schweißbrenner angeordnet, sondern getrennt hiervon. Hinzu kommt, daß bei der bekannten Anordnung eine Signalübertragung nur von der Schalteinrichtung zum Empfänger stattfindet. Eine Anzeige des eingestellten Schweißstroms ist nicht vorgesehen. Es ist daher eine häufiges Probieren erforderlich, um den richtigen Schweißstrom einzustellen. Die bekannte Anordnung erweist sich daher als nicht bedienungsfreundlich genug. Ein weiterer Nachteil ist darin zu sehen, daß eine vergleichsweise hohe Hilfsspannung benötigt wird, was einen zuverlässigen Schutz vor unzulässigen Berühungsspannungen erforderlich macht.

Die EP-A 0 244 807 enthält eine Vorrichtung zur Signalübertragung in einer Meßanordnung, die einen Meßumformer und ein entfernt davon angeordnetes Auswertegerät enthält, wobei der Meßumformer mit dem Auswertegerät durch eine Zweidrahtleitung verbunden ist, über die einerseits die Meßwertsignale vom Meßwertumformer zum Auswertegerät und andererseits der für den Betrieb des Meßumformers erforderliche Versorgungsstrom vom Auswertegerät zum Meßumformer übertragen werden. Zusätzlich ist noch eine Kommunikationseinheit vorgesehen, die parallel zum Meßumformer an die Zweidrahtleitung angeschlossen werden kann. Hierbei ist zwar eine Datenübertragung in zwei Richtungen möglich. Die Datenübertragung erfolgt hierbei jedoch über die Zweidrahtleitung, über die auch der Versorgungsstrom übertragen wird, der bei einer Schweißmaschine dem Schweißstrom entspricht.

Hiervon ausgehend ist es daher die Aufgabe der vorliegenden Erfindung, mit einfachen und kostengünstigen Mitteln eine Fernsteuerung für eine elektrische Schweißmaschine zu schaffen, die eine hohe Zuverlässigkeit und Bedienungsfreundlichkeit gewährleistet.

Diese Aufgabe wird durch die Maßnahmen des Anspruchs 1 gelöst.

Hieraus ergibt sich eine Fernsteuerung für eine elektrische Schweißmaschine mit wenigstens einem manuell bedienbaren, als Brenner ausgebildeten Arbeitsgerät und einer entfernt hiervon aufgestellten, die dem Arbeitsgerät zugeordneten Versorgungs- und Steuerungseinrichtungen in Form wenigstens einen Leistungsteils mit vorgeordneter, zentraler Steuereinheit enthaltenden und über in einem Schlauchpaket, das am der Basisbaugruppe zugewandten Ende mit einem Stecker versehen ist, der in eine zugeordnete Dose der Basisbaugruppe einsteckbar ist, angeordnete Versorgungsleitungen mit dem Arbeitsgerät verbundenen Basisbaugruppe, wobei im Bereich des Arbeitsgeräts eine Schalt- und Anzeigeeinrichtung vorgesehen ist, mittels der die Ausgangsgrößen der Versorgungseinrichtungen in der Basiseinheit ein- und ausschaltbar und verstellbar sowie anzeigbar sind, wobei der Schalt- und Anzeigeeinrichtung ein Steuerstromkreis zugeordnet ist, wobei die von der zentralen Steuereinheit der Basisbaugruppe zur Schalt- und Anzeigeeinrichtung hinführende Steuerleitung des Steuerstromkreises mit einem Strom beaufschlagbar ist, bei dem eine Kenngröße in Abhängigkeit von der durch die Stellung der Schaltelemente der Schalteinrichtung im Arbeitsgerät eingestellten Leistung moduliert ist, wobei die Anzeigeelemente der Anzeigeeinrichtung in Abhängigkeit von dieser Modulation aktivierbar sind, wobei die von der Schalt- und Anzeigeeinrichtung zur zentralen Steuereinrichtung zurückführende Steuerleitung des Steuerstromkreises mit einem Strom beaufschlagbar ist, bei dem eine andere Kenngröße in Abhängigkeit von der Stellung der Schaltelemente der Schalteinrichtung im Arbeitsgerät moduliert ist, und wobei die Versorgungseinrichtungen der Basisbaugruppe mittels der zentralen Steuereinrichtung in Abhängigkeit von dieser Modulation ansteuerbar sind.

Diese Maßnahmen ergeben eine hohe Bedienungsfreundlichkeit und Zuverlässigkeit. Dadurch, daß die Schalt- und Anzeigeeinrichtung auf dem Schweißbrenner vorgesehen ist, werden die Bedienung und Überwachung erleichtert. Der Steuerstromkreis ermöglicht eine Nachstellung des Schweißstroms auch während des Schweißvorgangs, was Probiervorgänge entbehrlich macht und einen hohen Arbeitskomfort sowie eine hohe Arbeitsqualität gewährleistet. Der Steuerstromkreis ermöglicht dabei sowohl die Energieversorgung der Schalt- und Anzeigeeinrichtung, als auch eine Signalübertragung zwischen einer zentralen Steuereinrichtung der Basisbaugruppe und der Schalt- und Anzeigeeinrichtung des Schweißbrenners und zwar in beiden Richtungen. Man kommt daher in vorteilhafter Weise für die Taster und Anzeigeelemente der Schalt- und Anzeigeeinrichtung mit einem Steuerstromkreis aus, der innerhalb des Schlauchpakets angeordnet werden kann, so daß zusätzliche Anschlußbuchsen im Bereich der Basisbaugruppe nicht erforderlich sind. Die erfindungsgemäßen Maßnahmen lassen sich dementsprechend auch in vorteilhafter Weise leicht und einfach nachrüsten.

Ein weiterer Vorteil der erfindungsgemäßen Maßnahmen ist darin zu sehen, daß sich im Rahmen der erfindungsgemäßen Kombination zur Bildung der Schaltelemente einfache Schiebeschalter und zur Bildung der Anzeigeelemente einfache Leuchtdioden verwenden lassen, die eine sinnfällige Farbanzeige ermöglichen. Hinzu kommt, daß die erfindungsgemäßen Maßnahmen in eine elektronische Schaltung integriert werden können, die in vorteilhafter Weise durch ansich bekanntes Ausgießen staubdicht und stoßsicher gemacht werden kann.

In zweckmäßiger Fortbildung der übergeordneten Maßnahmen kann zur Informationsübertragung zwischen der Zentralsteuereinrichtung und der Elektronik des Arbeitsgeräts die Pulsweite einer pulsierenden Spannnung moduliert werden, deren niedriger Pegel ausreicht, um die Betriebsspannung der Schalt- und Anzeigeeinrichtung aufzubauen. Zur Innformationsübertragung in umgekehrter Richtung, d.h. von der Elektronik des Arbeitsgeräts zur Zentralsteuereinrichtung kann einfach die Stromstärke eines von der Pulsweitenmodulation entkoppelten Gleichstroms Verwendung finden. Diese Maßnahmen ergeben eine besonders einfache und kostengünstige Bauweise. Gleichzeitig ergibt sich eine besonders hohe Unempfindlichkeit gegen thermische Einflüsse und damit eine hohe Genauigkeit und Störungsfreiheit. Auch bei extremen Bedinungen, wie beim Schweißen oder Schneiden oder dergleichen, wird durch die genannten Maßnahmen eine sichere Datenübertragung gewährleistet.

Weitere vorteilhafte Ausgestaltungen und zweckmäßige Fortbildungen der übergeordneten Maßnahmen ergeben sich aus der nachstehenden Beschreibung eines bevorzugten Ausführungsbeispiels anhand der Zeichnung in Verbindung mit den Unteransprüchen.

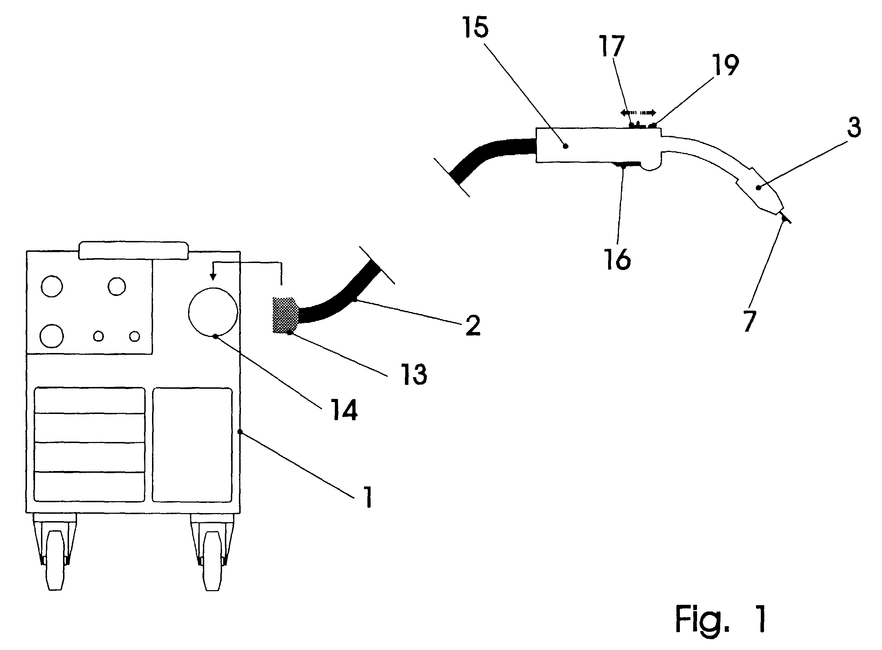

In der nachstehend beschriebenen Zeichnung zeigen:
**Figur 1**
   Eine schematische Ansicht einer erfindungsgemäßen Lichtbogenschweißmaschine,
**Figur 2**
   ein Signalflußschema der Anordnung gemäß Figur 1,
**Figur 3**
   ein Signal-Zeitdiagramm für den zur Brennerelektronik hinführenden Ast des Steuerstromkreises und
**Figur 4**
   ein Signal-Zeitdiagramm für den rückführenden Ast.

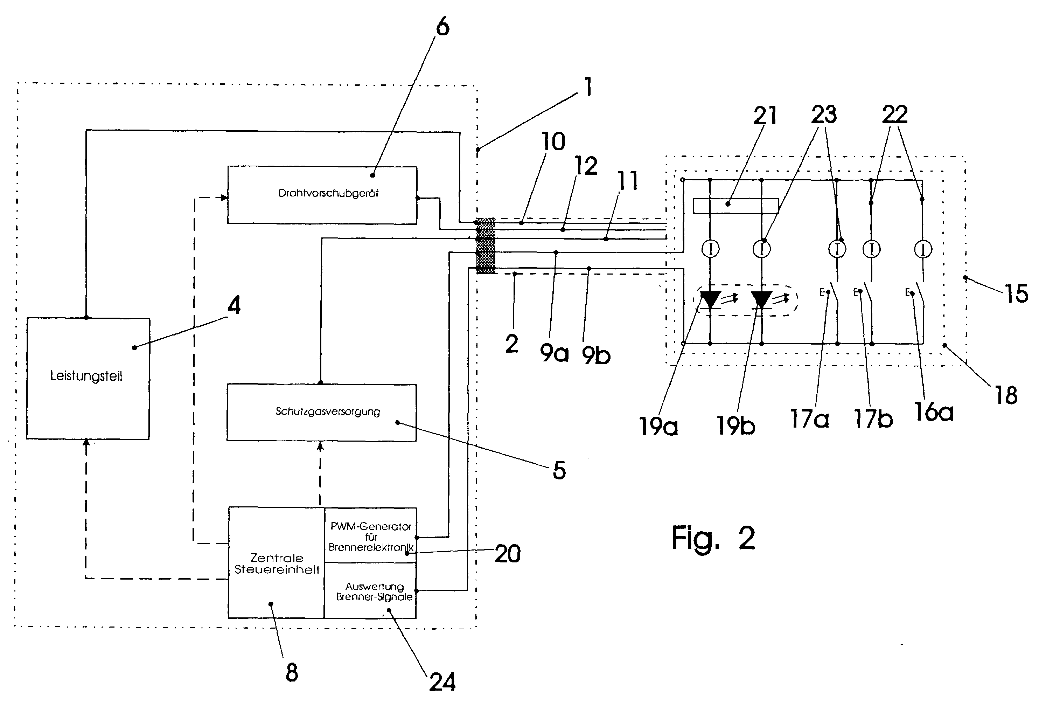

Die der Figur 1 zugrundeliegende Schweißmaschine besteht aus einer mit einem fahrbaren Gestell versehenen Basisbaugruppe 1 und einem über ein Schlauchpaket 2 hiermit verbundenen Brenner 3. Dieser ist hier als elektrischer Schutzgas-Schweißbrenner ausgebildet. Die Basisbaugruppe 1, welche die dem Brenner 3 zugeordneten Versorgungs- und Steuerungseinrichtungen enthält, ist dementsprechend, wie am besten aus Figur 2 erkennbar ist, mit einem elektrischen Leistungsteil 4 zur Bereitstellung der Schweißenergie, einer Schutzgasquelle 5 zur Bereitstellung des Schutzgases und einem Drahtvorschubgerät 6 zur Bereitstellung des Schweißdrahts 7 sowie einer zentralen Steuereinheit 8 zur Ansteuerung der vorstehend genannten Versorgungsorgane ausgestattet. Das Schlauchpaket 2 enthält, wie in Figur 2 weiter angedeutet ist, alle von der Basisbaugruppe 1 zum Brenner 3 führenden Versorgungsleitungen, hier in Fom des Vor- und Rücklaufasts 9a, 9b eines Steuerstromkreises, der Schweißstromleitung 10, der Schutzgasleitung 11 und der Schweißdrahtleitung 12.

Zum Verbinden des Schlauchpakets 2 mit der Basisbaugruppe 1 ist eine Schnellkupplung vorgesehen. Hierzu ist das Schlauchpaket 2 an seinem der Basisbaugruppe 1 zugewandten Ende, wie am besten aus Figur 1 erkennbar ist, mit einem Stecker 13 versehen, der in eine zugeordnete Dose 14 der Basisbaugruppe 1 einsteckbar ist, wie in Figur 1 durch einen Richtungspfeil angedeutet ist. Der Stecker 13 und die zugeordnete Dose 14 sind mit den obengenannten Versorgungsleitungen zugeordneten, aufeinander aufsteckbaren Kupplungselementen versehen.

Der von Hand manipulierbare Brenner 3 ist, wie Figur 1 weiter erkennen läßt, mit einem Handgriff 15 versehen. Dieser trägt eine Schalt- und Anzeigeeinrichtung zum Ein- und Ausschalten sowie zum Erhöhen und Erniedrigen der Schweißenergie und zum Anzeigen der momentanen Einstellung der Schweißenergie. Die genannte Schalt- und Anzeigeeinrichtung enthält einen Taster 16 zum Ein- und Ausschalten des Leistungsteils 4 sowie einen Taster 17 zum Erhöhen bzw. Absenken der Leistung des Leistungteils 4, d.h. der wirksam werdenden Schweißenergie. Die genannten Taster 16, 17 können als Schiebeschalter ausgebildet sein, die jeweils zwei Schaltstellungen besitzen, welche beim Taster 16 dem Ein- und Ausschaltvorgang und beim Taster 17 dem Auf- bzw. Absteuervorgang zugeordnet sind. Mit Hilfe der Taster 16, 17 werden zugeordnete Schalter betätigt. Diese sind, wie in Figur 2 angedeutet ist, in eine innerhalb des Handgriffs 15 angeordnete, elektronische Schaltung 18 integriert. Dem Taster 16 ist dabei ein Schalter 16a zugeordnet mit Hilfe dessen der Ein- und Ausschaltvorgang bewerkstelligt wird. Dem Taster 17 sind zwei Schalter 17a, 17b zugeordnet, von denen der Schalter 17a zum Erhöhen der Schweißenergie und der Schalter 17b zum Absenken der Schweißenergie dienen sollen.

Auf dem Handgriff 15 ist ferner eine Anzeigeeinrichtung 19 zum Anzeigen der momentanen Einstellung der Schweißenergie vorgesehen. Die Anzeigeeinrichtung 19 enthält eine Zweifarbleuchteinrichtung, die durch zwei in einem gemeinsamen Gehäuse und auf einem gemeinsamen Chip angeordnete, jeweils eine andere Farbe besitzende Leuchtdioden 19a, 19b gebildet werden kann, die schaltungsmäßig in die elektronische Schaltung 18 integriert sind, wie in Figur 2 angedeutet ist. Eine der Leuchtdioden, beispielsweise die Leuchtdiode 19a, kann eine rote Farbe besitzen und der obersten Einstellung der Schweißenergie zugeordnet sein. Die andere Leuchtdiode 19b kann beispielsweise grüne Farbe besitzen und der untersten Einstellung der Schweißenergie zugeordnet sein. Zwiscchen der obersten und der untersten Einstellung ist die Leuchtintensität der beiden Leuchtdioden analog zur momentanen Einstellung veränderbar, d.h. bei einer dem untersten Niveau näheren Einstellung leuchtet die grüne Leuchtdiode 19b mehr und umgekehrt. In diesen Zwischenstellungen ergibt sich dementsprechend eine der Einstellung entsprechende Mischfarbe der gesamten Zweifarbleuchteinrichtung.

Die Schalter 16a, 17a, 17b sowie die Leuchtdioden 19a, 19b sind, wie oben schon erwähnt, durch die in Figur 2 schematisch angedeutete, elektronische Schaltung 18 miteinander verknüpft, die innerhalb des Steuerstromkreises 9a, 9b angeordnet ist. Dieser dient zur Bereitstellung der Betriebsspannung sowie zur Signalübermittlung von der zentralen Steuereinheit 8 der Basisbaugruppe 1 zur im Bereich des Brenners vorgesehenen elektronischen Schaltung 18 und umgekehrt. Dementsprechend ist nur ein Steuerstromkreis erforderlich, der über innerhalb der Steckkupplung 13, 14 angeordnete Kontakte laufen kann.

Um den Steuerstromkreis 9a, 9b gleichzeitig als Signalflußleitung von der zentralen Steuereinheit 8 der Basisbaugruppe 1 zur brennerseitigen, elektronischen Schaltung 18 und umgekehrt verwenden zu können, werden der über den zur elektronischen Schaltung 18 hinführenden Ast 9a und der über den hiervon zur zentralen Steuereinheit 8 zurückführenden Ast 9b des Steuerstromkreises jeweils laufende Strom unterschiedlich moduliert, d.h. es werden unterschiedliche Kenngrößen des jeweiligen Stroms signalabhängig moduliert.

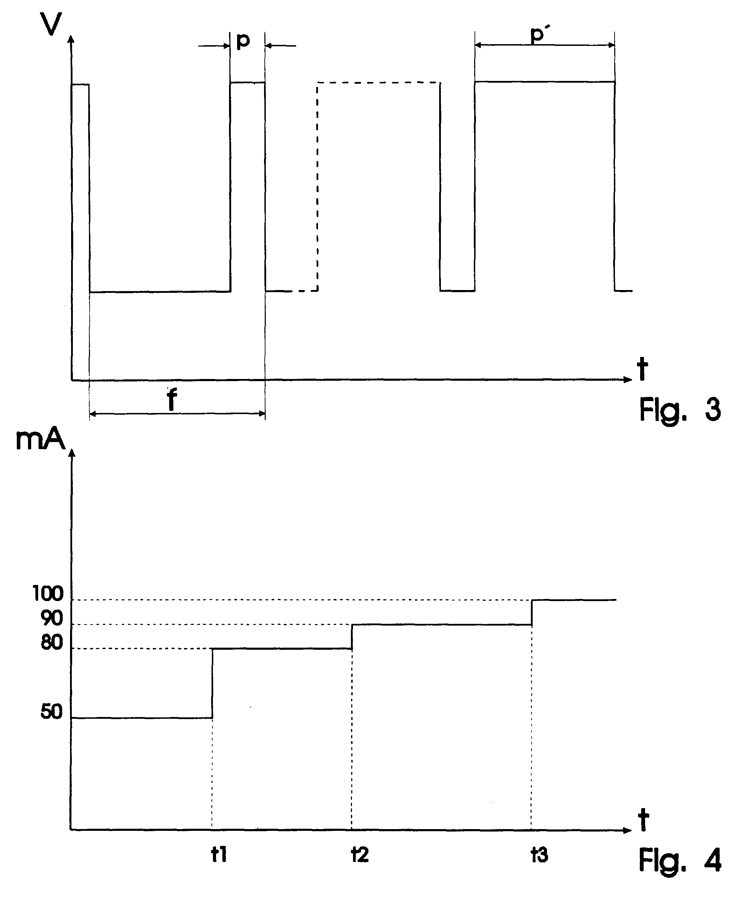

Im dargestellten Beispiel werden die von der zentralen Steuereinheit 8 zur elektronischen Schaltung 18 hingesandten Signale zur Ansteuerung der Leuchtdioden 19a, 19b durch Modulation der Pulsweite der Spannung erzeugt. Hierzu ist dem von der zentralen Steuereinhaeit 8 zur brennerseitigen Elektronik 18 hinführenden Ast 9a des Steuerstromkreises ein von der zentralen Steuereinheit 8 ansteuerbarer PWM-Generator 20 vorgeordnet, der eine in Abhängigkeit von der momentanen Einstellung Schweißenergie pulsweitenmodulierte Spannung erzeugt. Die über den Ast 9a laufende Spannung pulsiert, wie in Figur 3 angedeutet ist, mit konstanter Frequenz f zwischen zwei Schwellenwerten. Der untere Schwellenwert reicht aus, um die Betriebsspannung aufrecht zu erhalten. Durch Modulation wird die Pulsweite der pulsierenden Spannung verändert, wie aus einem Vergleich der Pulsweiten p und p' ersichtlich ist. Durch die brennerseitige Elektronik 18 werden die ankommenden Pulsweiten in Steuerbefehle für die Leuchtdioden 19a, 19b umgewandelt, wie durch den Wandler 21 angedeutet ist.

Im dargestellten Beispiel soll die schmale Pulsweite p dem unteren Extremwert und die breite Pulsweite p' dem oberen Extremwert der Schweißenergie zugeordnet sein. Wenn die schmalen Pulse erzeugt werden, werden diese Signale so verarbeitet, daß die grüne Leuchtdiode 19b leuchtet. Wenn die breiten Pulse erzeugt werden, werden diese so verarbeitet, daß die rote Leuchtdiode 19a leuchtet. Dazwischen leuchten beide mit der jeweiligen Schweißenergieeinstellung angepaßter Intensität, so daß sich eine entsprechende Mischfarbe ergibt.

Die von der Elektronik 18a zur zentralen Steuereinheit 8 zurückgesandten Signale zum Hinauf- bzw. Heruntersteuern des Leistungsteils 4 werden durch Veränderung der Stromstärke erzeugt. Hierzu sind, wie Figur 2 weiter erkennen läßt, die Schalter 16a, 17a, 17b und die Leuchtdioden 19a, 19b in parallelen Strompfaden 22 angeordnet, von denen jeder einen zugeordneten Stromgenerator 23 enthält, der einen schwankungsfreien Gleichstrom erzeugt und eine Entkopplung des Stroms von der Pulsweitenmodulation durchführt. Über die Leuchtdioden 19a, 19b fließt immer Strom. Über die Schalter 16a, 17a, 17b nur dann, wenn diese Schalter geschlossen sind. Die Gesamtstärke des über den rückführenden Ast 9b des Steuerstromkreises fließenden Stroms hängt dementsprechend, wie in Figur 4 angedeutet ist, von der Stellung der einzelnen Schalter 16a, 17a, 17b ab. Der Diodenstrom beispielsweise 50 Milliamper betragen. Der dem Schalter 16a zum Ein- und Ausschalten des Leistungsteils zugeordnete Strom soll im dargestellten Beispiel 30 Milliamper betragen, der dem Schalter 17a zum Hochfahren des Leistungsteils zugeordnete Strom soll 20 Milliamper und der dem Schalter 17b zum Herunterfahren des Leistungsteils zugeordnete Strom soll 10 Milliamper betragen. Dementsprechend fließen bei geschlossenem Schalter 16a und geöffneten Schaltern 17a, 17b, 80 Milliamper, bei zusätzlich geschlossenem Schalter 17b, 90 Milliamper und bei alternativ zum Schalter 17b zusätzlich geschlossenem Schalter 17a, 100 Milliamper. Beim Stromverlauf gemäß Figur 4 wird zum Zeitpunkt t₁ der Schalter 16a geschlossen. Die beiden 17a, 17b sind noch geöffnet. Zum Zeitpunkt t₂ wird der Schalter 17b geschlossen, um die Schweißenergie zurückzusteuern. Anschließend werden zum Zeitpunkt t₃ der Schalter 17b geöffnet und gleichzeitig der Schalter 17a geschlossen, um die Schweißenergie zu Erhöhen.

Die Gesamtstärke des jeweils ankommenden Stroms wird durch einen signalmäßig der zentralen Steuereinheit 8 vorgeordneten Wandler 24 erkannt und in Signale für die zentrale Steuereinheit 8 umgewandelt, welche diese Signale in geeignete Befehle für das Leistungsteil 4 umsetzt. Da die Stromstärke im ganzen Stromkreis gleich ist, kann der Wandler 24 irgendwo im Vor- oder Rücklaufast 9a, 9b des Steuerstromkreises angeordnet sein. Im dargestellten Beispiel ist der Wandler 24 wie der PWM-Generator 20 mit der zentralen Steuereinheit 8 zu einer Baueinheit zusammengefaßt. Parallel zur Leistung werden der Drahtvorschub geregelt und das Schutzgas ein- und ausgeschaltet.

## Patentansprüche

1. Elektrische Schweißmaschine mit einer Fernsteuerung und mit wenigstens einem manuell bedienbaren, als Brenner ausgebildeten Arbeitsgerät (3) und einer entfernt hiervon aufgestellten mit dem Arbeitsgerät (3) verbundenen Basisbaugruppe (1),
wobei die Basisbaugruppe die dem Arbeitsgerät (3) zugeordneten Versorgungs- und Steuerungseinrichtungen (4,5,6,8) in Form wenigstens eines Leistungsteils mit vorgeordneter, zentraler Steuereinheit enthält, und über in einem Schlauchpaket angeordnete Versorgungsleitungen (9a, 9b, 10, 11, 12) mit dem Arbeitsgerät verbunden ist,
wobei das Schlauchpaket am der Basisbaugruppe (1) zugewandten Ende mit einem Stecker (13) versehen ist, der in eine zugeordnete Dose (14) der Basisbaugruppe einsteckbar ist,
und wobei im Bereich des Arbeitsgeräts (3) eine Schalt- und Anzeigeeinrichtung (16, 17, 19) vorgesehen ist, mittels der die Ausgangsgrößen der Versorgungs-einrichtungen (4,5,6) in der Basiseinheit (1) ein- und ausschaltbar und verstellbar sowie anzeigbar sind, und wobei der Schalt- und Anzeigeeinrichtung (16,17,19) ein separater Steuerstromkreis (9a,9b) zugeordnet ist,
wobei die von der zentralen Steuereinheit (8a) der Basisbaugruppe (1) zur Schalt- und Anzeigeeinrichtung (16,17,19) hinführende Steuerleitung (9a) des Steuerstromkreises mit einem Strom beaufschlagbar ist, bei dem eine Kenngröße in Abhängigkeit von der durch die Stellung der Schaltelemente (16a,17a,17b) der Schalteinrichtung (16,17) im Arbeitsgerät eingestellten Leistung moduliert ist,
wobei die Anzeigeelemente (19a,19b) der Anzeigeeinrichtung (19) in Abhängigkeit von dieser Modulation aktivierbar sind,
wobei die von der Schalt- und Anzeigeeinrichtung (16,17,19) zur zentralen Steuereinrichtung (8a) zurückführende Steuerleitung (9b) des Steuerstromkreises mit einem Strom beaufschlagbar ist, bei dem eine andere Kenngröße in Abhängigkeit von der Stellung der Schaltelemente (16a,17a,17b) der Schalteinrichtung (16,17) im Arbeitsgerät (3) moduliert ist,
und wobei die Versorgungseinrichtungen (4,5,6) der Basisbaugruppe (1) mittels der zentralen Steuereinrichtung (8) in Abhängigkeit von dieser Modulation ansteuerbar sind.

2. Elektrische Schweißmaschine nach Anspruch 1, **dadurch gekennzeichnet, daß** die Anzeige- und Schaltelemente (19a,19b,16a,17a,17b) der Schalt- und Anzeigeeinrichtung durch eine elektronische Schaltung (18) miteinander verknüpft sind.

3. Elektrische Schweißmaschine nach einem der vorhergehenden Ansprüche, **dadurch gekennzeichnet, daß** die Anzeigeelemente als Leuchtdioden (19a,19b) ausgebildet sind, die unterschiedliche Farben aufweisen und deren Intensität mittels der elektronischen Schaltung (18) mit einer Änderung der Modulation des zugeführten Stroms gegenläufig veränderbar ist.

4. Elektrische Schweißmaschine nach einem der vorhergehenden Ansprüche, **dadurch gekennzeichnet, daß** die Schalteinrichtung (3) durch zugeordnete Taster (16, 17) betätigbare Schalter (16a, 17a, 17b) aufweist, von denen einer zum Ein- und Ausschalten, einer zum Erhöhen und einer zum Absenken der Leistung des Arbeitsgeräts vorgesehen ist.

5. Elektrische Schweißmaschine nach Anspruch 4, **dadurch gekennzeichnet, daß** die Schalter (16a, 17a, 17b) und Leuchtdioden (19a, 19b) in parallelen, mit von der eingangsseitigen Modulation entkoppeltem Strom beaufschlagbaren Strompfaden (22) angeordnet sind.

6. Elektrische Schweißmaschine nach einem der vorhergehenden Ansprüche, **dadurch gekennzeichnet, daß** dem zur Schalt- und Anzeigeeinrichtung des Arbeitsgeräts hinführenden Ast (9a) des Steuerstromkreises ein mit der zentralen Steuereinheit (8) verbundener PWM-Generator (20) zur Erzeugung einer in Abhängigkeit von der eingestellten Leistung des Arbeitsgeräts pulsweitenmodulierten Spannung zugeordnet ist und daß die elektronische Schaltung (18) einen die ankommendenen Spannungspulsweiten in Steuersignale für die Leuchtdioden (19a, 19b) umsetzenden Wandler (21) enthält.

7. Elektrische Schweißmaschine nach Anspruch 5 oder 6, **dadurch gekennzeichnet, daß** jedem Strompfad (22) ein einen schwankungsfreien Gleichstrom erzeugender Stromgenerator (23) zugeordnet ist.

8. Elektrische Schweißmaschine nach Anpruch 7, **dadurch gekennzeichnet, daß** dem zur zentralen Steuereinheit (8) zurückführenden Ast (9b) des Steuerstromkreises ein die Stromstärke des ankommenden Stroms in Steuersignale für die Versorgungseinrichtugen umsetzender Wandler (24) zugeordnet ist.

## Claims

1. Electrical welding machine with a remote control and with at least one manually-operable implement (3) in the form of a torch, and a base unit (1) connected to the implement (3) and set up at a distance from it,
wherein the base unit contains the supply and control elements (4, 5, 6, 8) assigned to the implement (3) in the form of one or more power sections with upstream, central control unit, and is connected to the implement via supply lines (9a, 9b, 10, 11, 12) arranged in a hose assembly,
wherein the hose assembly is provided at the end facing the base unit (1) with a plug (13) which can be inserted into an assigned socket (14) of the base unit,
and wherein there is provided, in the area of the implement (3), a switching and display unit (16, 17, 19), by means of which the output values of the supply elements (4, 5, 6) in the base unit (1) may be switched on and off, adjusted and displayed, and wherein the switching and display unit (16, 17, 19) is assigned a separate control circuit (9a, 9b),
wherein the control line (9a) of the control circuit leading from the central control unit (8a) of the base unit (1) to the switching and display unit (16, 17, 19) can be supplied with a current at which a characteristic value is modulated in the implement, depending on the power set by the position of the switching elements (16a, 17a, 17b) of the switching unit (16, 17),
wherein the display elements (19a, 19b) of the display unit (19) may be activated depending on this modulation,
wherein the control line (9b) of the control circuit leading back from the switching and display unit (16, 17,19) to the central control unit (8a) can be supplied with a current at which a different characteristic value is modulated in the implement (3), depending on the position of the switching elements (16a, 17a, 17b) of the switching unit (16, 17),
and wherein the supply elements (4, 5, 6) of the base unit (1) may be actuated by means of the central control unit (8), depending on this modulation.

2. Electrical welding machine according to claim 1, **characterized in that** the display and switching elements (19a, 19b, 16a, 17a, 17b) of the switching and display unit are linked together by an electronic circuit (18).

3. Electrical welding machine according to any of the preceding claims, **characterized in that** the display elements are in the form of light-emitting diodes (19a, 19b) which have different colours, and the intensity of which is variable in the opposite direction by means of the electronic circuit (18), with a change in the modulation of the supplied current.

4. Electrical welding machine according to any of the preceding claims, **characterized in that** the switching unit (3) has switches (16a, 17a, 17b) which may be actuated by assigned push-buttons (16, 17) and of which one is provided for switching on and off, one for increasing and one for reducing the power of the implement.

5. Electrical welding machine according to claim 4, **characterized in that** the switches (16a, 17a, 17b) and light-emitting diodes (19a, 19b) are arranged in parallel, with current paths (22) which may be supplied with current decoupled from the input-side modulation.

6. Electrical welding machine according to any of the preceding claims, **characterized in that** the branch (9a) of the control circuit leading to the switching and display unit of the implement is assigned a PWM generator (20) linked to the central control unit (8) to generate a pulse-width-modulated voltage varying with the set power of the implement, and that the electronic circuit (18) contains a transducer (21) which converts the incoming voltage pulse widths into control signals for the light-emitting diodes (19a, 19b).

7. Electrical welding machine according to claim 5 or 6, **characterized in that** each current path (22) is assigned a current generator (23) which generates a non-fluctuating direct current.

8. Electrical welding machine according to claim 7, **characterized in that** the branch (9b) of the control circuit leading back to the central control unit (8) is assigned a transducer (24) for converting the current strength of the incoming current into control signals for the supply elements.

## Revendications

1. Machine de soudage électrique munie d'une télécommande et d'au moins un outil (3) pouvant être utilisé manuellement, constitué par une torche, et d'un module de base (1) agencé à distance et relié à l'outil (3),
dans lequel le module de base comprend les dispositifs d'alimentation et de commande (4, 5, 6, 8) associés à l'outil (3), sous la forme d'au moins une partie de puissance munie d'une unité de commande centrale placée en amont, et reliée à l'outil par l'intermédiaire de conduits d'alimentation (9a, 9b, 10, 11, 12) disposées dans un faisceau de canalisations,
dans lequel le faisceau de canalisations est muni, à l'extrémité dirigée vers le module de base (1), d'une fiche qui peut être enfichée dans un socle (14) correspondant du module,
et dans lequel est prévu, à proximité de l'outil (3), un dispositif de commande et d'affichage (16, 17, 19) au moyen duquel les grandeurs de sortie du dispositif d'alimentation (4, 5, 6) contenues dans l'unité de base (1) peuvent être enclenchées et déclenchées, réglées ainsi qu'affichées, et dans lequel un circuit de commande séparé (9a, 9b) est associé au dispositif de commande et d'affichage (16, 17, 19),
dans lequel le conduit de commande (9a) du circuit de commande qui conduit de l'unité de commande centrale (8a) du module de base (1) au dispositif de commande et d'affichage (16, 17, 19) peut recevoir un courant, dans lequel un paramètre est modulé en fonction de la puissance réglée dans l'outil par la position des éléments de commande (16a, 17a, 17b) du dispositif de commande (16, 17) inclus dans l'outil,
dans lequel les éléments d'affichage (19a, 19b) du dispositif d'affichage (19) peuvent être activés en fonction de cette modulation,
dans lequel le conduit de commande (9b) du circuit de commande qui renvoie du dispositif de commande et d'affichage (16, 17, 19) au dispositif de commande central (8a) peut recevoir un courant, dans lequel un autre paramètre est modulé en fonction de la position des éléments de commande (16a, 17a, 17b) du dispositif de commande (16, 17) contenu dans l'outil (3),
et dans lequel les dispositifs d'alimentation (4, 5, 6) du module de base (1) peuvent être pilotés au moyen du dispositif de commande central (8) en fonction de cette modulation.

2. Machine de soudage électrique selon la revendication 1, **caractérisée en ce que** les éléments d'affichage et de commande (19a, 19b, 16a, 17a, 17b) du dispositif de commande et d'affichage sont connectés entre eux par un circuit électronique (18).

3. Machine de soudage électrique selon l'une des revendications précédentes, **caractérisée en ce que** les éléments d'affichage sont constitués par des diodes électroluminescentes (19a, 19b) qui présentent différentes couleurs et dont l'intensité peut être modifiée en sens inverse l'une de l'autre au moyen du circuit électronique (18), par une variation de la modulation du courant acheminé.

4. Machine de soudage électrique selon l'une des revendications précédentes, **caractérisée en ce que** le dispositif de commande (3) présente des commutateurs (16a, 17a, 17b) pouvant être actionnés par des touches correspondantes (16, 17), et dont l'un est prévu pour la mise sous tension et hors tension, un autre pour augmenter la puissance de l'outil et un autre pour la diminuer.

5. Machine de soudage électrique selon la revendication 4, **caractérisée en ce que** les commutateurs (16a, 17a, 17b) et les diodes électroluminescentes (19a, 19b) sont intercalés dans des circuits parallèles (22) qui peuvent recevoir un courant découplé de la modulation côté entrée.

6. Machine de soudage électrique selon l'une des revendications précédentes, **caractérisée en ce qu'**à la branche (9a) du circuit de commande qui conduit au dispositif de commande et d'affichage de l'outil, est associé un générateur PWM (20) relié à l'unité de commande centrale (8), destiné à produire une tension modulée en largeur d'impulsions en fonction de la puissance réglée de l'outil, et en ce que le circuit électronique (18) inclut un convertisseur (21) qui convertit les largeurs d'impulsions de tension qui entrent, en signaux de commande pour les diodes électroluminescentes (19a, 19b).

7. Machine de soudage électrique selon la revendication 5 ou 6, **caractérisée en ce qu'**à chaque circuit électrique (22) est associé un générateur de courant (23) qui produit un courant continu dépourvu de fluctuations.

8. Machine de soudage électrique selon la revendication 7, **caractérisée en ce qu'**à la branche (9b) du circuit de commande qui renvoie à l'unité de commande centrale (8), est associé un convertisseur (24) qui convertit l'intensité du courant qui entre en signaux de commande pour les dispositifs d'alimentation.
